# EUROPEAN PATENT SPECIFICATION

(11) **EP 0 896 218 B1**
(45) Date of publication and mention of the grant of the patent: **13.03.2002**
(21) Application number: 98306142.5
(22) Date of filing: 31.07.1998
(51) Int. Cl.: G01N 27/12

(54) **Metal oxide oxygen sensors based on phase transformation**
Metalloxidsauerstoffsensoren auf der Basis eines Phasenübergangs
Capteurs d'oxygène à base d'une transformation de phase dans un oxyde de métal

(30) Priority: 04.08.1997 US 905372; 04.08.1997 US 906237
(43) Date of publication of application: 10.02.1999
(73) Proprietor: Ford Global Technologies, Inc., Dearborn, Michigan 48126 (US)
(72) Inventor: Soltis, Richard E., Saline, Michigan 48176 (US); Logothetis, Eleftherios Miltiadis, Birmingham, Michigan 48009 (US)
(74) Representative: Messulam, Alec Moses

(56) References cited:
- EP-A- 0 780 683
- US-A- 4 351 182
- US-A- 4 764 343
- US-A- 5 397 541
- US-A- 5 406 193
- US-A- 5 783 153

## Description

This invention is directed to oxygen sensors which detect changes in oxygen partial pressure in an ambient atmosphere based on phase changes of a material, e.g., cobalt oxide which can change from one phase of cobalt oxide, Co₃O₄, to another, CoO.

Reference is made to related application Serial No. 08/905892 and 08/906237 concerning "High Sensitivity Phase-Transformations-Based Oxygen Sensors for Proportional Control" concurrently filed with this application and having the same inventorship.

Oxygen sensors have received widespread attention particularly for applications like combustion control, process control, and medical applications. In the automotive area, oxygen sensors are used to control the Air-to-Fuel Ratio (A/F) of internal combustion engines. The great majority of present day automobiles employ an electrochemical-type oxygen sensor to control the A/F ratio. Generally this ratio is controlled at the stoichiometric value, about 14.4 - 14.7, where the so-called three-way catalysts have the greatest efficiency for eliminating regulated emissions (hydrocarbons, carbon monoxide, and oxides of nitrogen) from the exhaust gas. A conventional automotive oxygen sensor, sometimes called a lambda sensor, includes an oxygen-ion-conducting solid electrolyte, generally ZrO₂, in the form of a thimble with porous platinum electrodes deposited on the outside and the inside surfaces of the thimble. The inside of the thimble is exposed to ambient air as a reference atmosphere, whereas the outside of the thimble is exposed to the exhaust gas. When the thimble is heated (e.g. temperatures higher than 300°C) and there is a difference in the oxygen partial pressures Pₒ₂ between the two sides of the ZrO₂ thimble, an electromotive force (emf) is generated between the two Pt electrodes with a value given by the Nernst equation: emf = (RT/kT) In(Pₒ₂,exh/Pₒ₂,air).

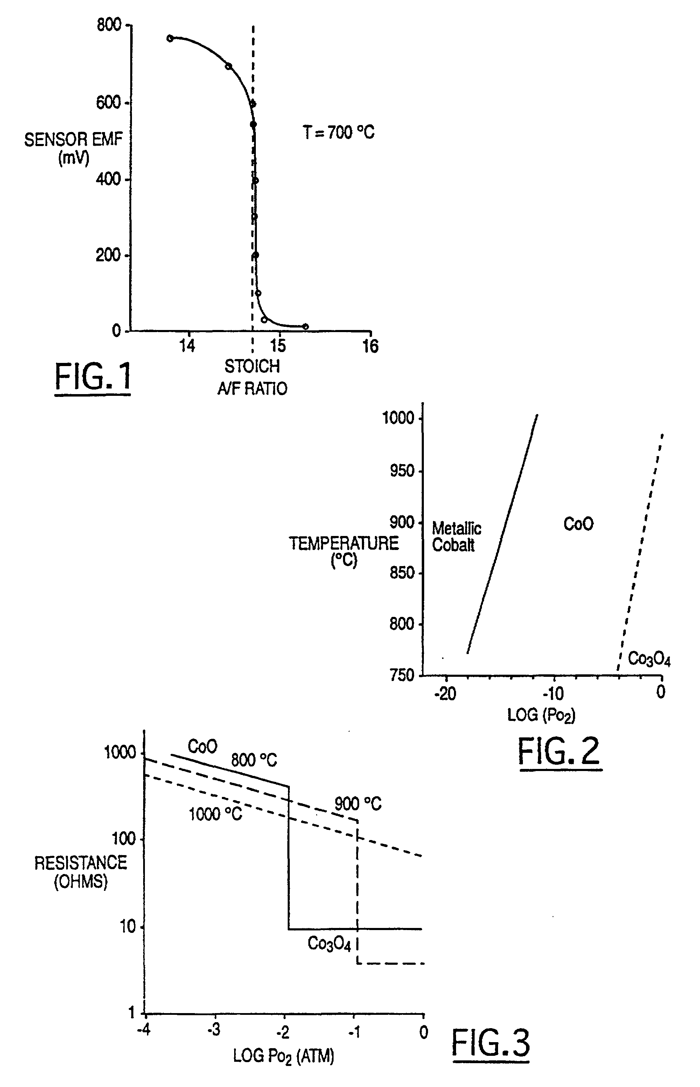

When the sensor is placed in the exhaust gas of a vehicle, and the A/F is varied, the sensor emf shows a large and abrupt change at the stoichiometric A/F value as shown in Fig. 1. The reason is that the thermodynamic equilibrium oxygen partial pressure in the exhaust gas changes by many orders of magnitude at the stoichiometric A/F ratio. Away from stoichiometry, the emf varies only slowly with A/F because the partial oxygen pressure also changes only slowly with A/F.

Another type of a high temperature oxygen sensor useful in automotive applications is a resistive-type sensor based on TiO₂. At elevated temperatures, the electrical resistivity of metal oxides like TiO₂, SrTiO₃ and CoO depends on the oxygen partial pressure Pₒ₂ in the ambient gas atmosphere. This dependence is, however, generally weak. For example, for TiO₃, SrTiO₃ and CoO, this dependence is only a positive or negative ¼ to 1/6 power dependence. In spite of their weak Pₒ₂ sensitivity, TiO₂ sensors are useful for stoichiometric A/F control because they also exhibit a large and abrupt electrical resistance change at the stoichiometric A/F value as the result of the large change in exhaust gas Pₒ₂ near stoichiometry.

In addition to stoichiometric oxygen sensors, there is a growing need for oxygen sensors that can measure A/F away from stoichiometry, in particular in the lean A/F region where excess oxygen is employed. These A/F ratios are often 19-40. Many engines are being modified for lean operation because of the fuel economy advantages which can be achieved. These sensors must have high Pₒ₂ sensitivity because the oxygen partial pressure in the exhaust gas does not change appreciably with A/F in this region. As discussed above, the conventional ZrO₂ lambda sensor and the resistive-type sensors previously mentioned have very limited sensing ability away from stoichiometry. In addition the resistive-type sensor generally have a strong dependence on temperature.

On the other hand, another type of sensor, i.e., a ZrO₂ based sensor operating in the oxygen pumping mode, has much higher sensitivity (e.g. 1st-power Pₒ₂ dependence) away from stoichiometry. Examples of this type of sensor are the Universal Exhaust Gas Oxygen Sensor (UEGO) and the Lean Exhaust Gas Oxygen Sensor (LEGO) based on two ZrO₂ cells. These sensors are structurally complex and consequently expensive to manufacture, which limits their widespread commercialisation. As a result, efforts are continuing to develop a simple sensor having high oxygen sensitivity for A/F measurement away from stoichiometry.

It is known that some metal oxides change to another metal oxide phase when the temperature or the Pₒ₂ are changed appropriately. For example, at a given temperature, CoO is stable at low Pₒ₂, but at higher Pₒ₂, it transforms to Co₃O₄ as shown in Fig. 2. Such metal-oxide to metal-oxide phase transitions are also generally accompanied by large changes in their electrical resistivity which can make these materials useful for oxygen sensors. In the case of cobalt oxide, the resistance decreases by almost two orders of magnitude when CoO changes to Co₃O₄. Fig. 3 shows results of the large stepwise changes in the resistance of a porous cobalt oxide ceramic as a function of Pₒ₂ at several temperatures associated with the phase change from CoO to Co₃O₄.

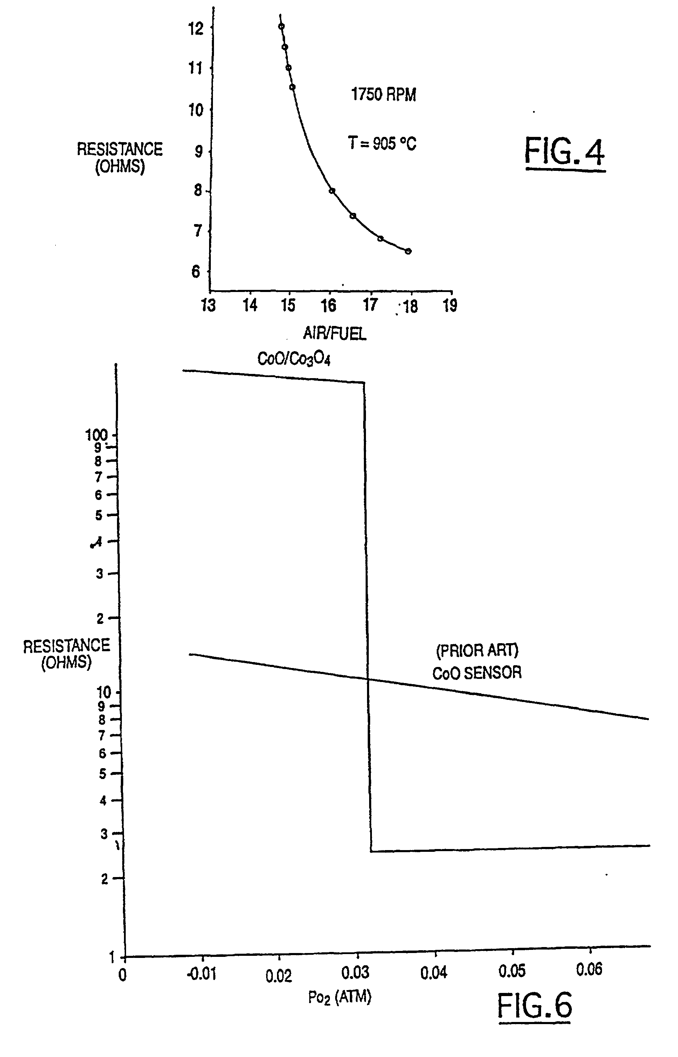

The resistivity of Co₃O₄ is independent of Pₒ₂, whereas the resistivity of CoO decreases with increasing Pₒ₂ according to the relationship R = A exp( E/kT) (Pₒ₂)^{-1/4}. This property of CoO has been utilised in fabricating oxygen sensors as disclosed by G.L. Beaudoin et al., SAE Paper #760312, Feb. 23, 1976 and US Patent #3,933,028 to K.R. Laud et al. For example, if the temperature of the material is kept at some temperature in the range 900-1000°C, the resistance of CoO can be used to measure changes in the Pₒ₂ of ambient air, or changes in the A/F ratio of internal combustion engines, e.g., gasoline and diesel, in the lean region. This type of prior art sensor consisted of a porous CoO ceramic with two Pt wires embedded into the ceramic, and inserted into a miniature cylindrical furnace to maintain the temperature of the CoO element at a constant high temperature. Fig. 4 shows the resistance of such a CoO ceramic as a function of the A/F ratio of an internal combustion engine in the lean region from A/F = 14.8 to A/F = 18. The oxygen sensitivity of this sensor, however, is seen from Fig. 4 to be low. That is, the resistance changes by a factor of only about 2 when the oxygen partial pressure in the exhaust gas charges from about 5x10⁻³ atm.(A/F = 14.8) to about 6x10⁻² atm. (A/F = 18).

The large change in the resistance of a ceramic due to the conversion of the material from one oxide phase to the other, however, may be used to make a more sensitive oxygen sensor. And the oxygen partial pressure in the ambient gas can be determined, for example, by ramping the sample temperature between two appropriate values and monitoring the temperature for which the resistance changes by a large amount and then using the phase diagram of Fig. 2 to determine the ambient Pₒ₂. When one wants to use this sensor to control the oxygen partial pressure at a specific value P_{o2,c}, the temperature of the sample is kept constant at the value T_{c} for which the sample converts from one oxide phase to the other at that specific oxygen partial pressure.

US Patent 4,351,182 to Schmidberger discloses a sensor for monitoring the oxygen content in oxygen rich exhaust gases from furnaces based on material phase transformations, more particularly from metal to metal oxide and vice versa. The oxygen sensitive material is a palladium layer maintained at a specific high temperature, e.g. 700°C, whereby palladium metal (Pd) changes phase to palladium oxide (PdO) when the oxygen partial pressure exceeds a specific "critical" value, P_{o2,c}. It is disclosed that the phase change from Pd to PdO, and back, causes a change in the material's conductivity by a factor of about 20 which is used to provide a sensor output signal.

US-A-4764343 describes a gas sensing apparatus suitable for repeatedly sensing the partial pressure of a selected gas in a gaseous mixture employing optical detecting means. A sensing material having a light reflective surface reversibly reacts with a sensed gas in accordance with a temperature-sensed gas partial pressure relationship to cause a predictable change in reflectivity of the sensing material. US-A-5,397,541 describes an oxygen sensor based on a thin film of a compound oxide supported on a substrate such as quartz. The compound oxide has a general formula ABO_{2.5+x}, where A is an element of the lanthanum family, alkaline earth metal or their mixture, and B is a transition metal or a mixture of transition metals. X is a variable number, changing from about 0 to about 0.5 between the reversible oxygen-deplete and oxygen-rich forms of the oxide. In an elevated temperature and oxygen-containing atmosphere, the thin film can undergo reversible bulk oxidation resulting in a detectable change of its physical properties such as mass, optical transmissivity and electrical resistance. All measurements are made at a constant temperature. EP0780683 describes an apparatus for dewpoint determination which includes a glass plate which may be cooled differentially at opposite ends so that as the mean temperature of the plate falls, a temperature gradient is established along the plate so that as dew starts to form on the plate it does so as a wave which travels along the plate as cooling progresses. Electro-optical sensing means senses the passage of the wave front past a location on the plate at which a temperature sensor is disposed.

Phase transitions from a metal to metal oxide, or from a metal oxide to another metal oxide are known to be generally accompanied by significant hysteresis unless the Pₒ₂ is changed to a value substantially larger (or smaller) than P_{o2,c}. Hysteresis is related to the time that it takes for the material to change from one phase to another and is believed to be associated with a necessary nucleation process, i.e., formation of critical size nuclei of the new phase. The presence of hysteresis in phase transformation type sensors would negatively impact their usefulness since they would have relatively long response time.

The present invention overcomes the deficiencies of prior sensors and provides an oxygen sensor useful for automotive applications having excellent sensitivity and response time in a variety of A/F ratios, including lean-burn engines.

In accordance with the present invention there is provided an oxygen sensor as hereinafter set forth in claim 1. The features of the preamble to claim 1 are known from US-A-4 764 343.

The oxygen sensor of the present invention advantageously provides a relatively low cost sensor with excellent sensitivity and response time. In addition, the sensor is much less complex to fabricate than many present sensors because it does not need the high quality seal between exhaust gas and air.

The invention will now be described, by way of example, with reference to the accompanying drawings, in which:
Fig. 1 is a graph showing the measured emf of a conventional automotive ZrO₂ oxygen sensor (lambda-sensor-type) as a function of the Air-to-Fuel Ratio of an engine;
Fig. 2 is a Pₒ₂ vs. T graph of the phase diagram for the Co-O system;
Fig. 3 is a graph showing the stepwise change in resistance of a cobalt oxide ceramic sample as a function of Pₒ₂ at several temperatures due to the phase change from CoO to Co₃O₄;
Fig. 4 is a graph of the resistance (ohms) vs. Air-to-Fuel ratio for a CoO oxygen sensor according to prior art;
Fig. 5 is a schematic of an embodiment of an oxygen sensor according to the present invention where the measured physical property of the sensing material is its electrical resistivity;
Figs. 5A, 5B, & 5C are schematics of alternate embodiments of a portion of a Fig. 5 type oxygen sensor wherein the positioning of the electrical contacts has been modified;
Fig. 6 is a graph showing the resistance (ohms) response of the Fig. 5 sensor to varying Pₒ₂ or O₂ concentration. The resistance response of a Fig. 4 prior art CoO sensor is also shown for comparison; and

The oxygen sensor disclosed herein is useful for detecting a change of oxygen partial pressure in an ambient atmosphere. It includes a sensing material which is selected from metal or its oxides which, when at an elevated temperature and exposed to a gas containing a changing partial pressures of oxygen, is capable of changing from one metal or metal oxide phase to another such oxide phase and vice versa. Associated with such phase changes are changes in a measurable physical property, such as electrical resistance.

The sensing material may be a single metal, oxide thereof, or a compound of two or more metals or oxides thereof. It may also be a mixture of such materials. Preferred metals include, but are not limited to, metals like copper, palladium, indium, ruthenium, and rhodium; 3d transition metals; and rare earth elements. Exemplary of such 3d transition metals are titanium, vanadium, chromium, manganese, iron, cobalt, and nickel to name a few. Exemplary rare earth elements include La, Ce, Pr, Ni, Sm, Eu, Gd, Er etc. The sensing material may be a ternary and higher order compounds of the above metals with other elements like alkaline earth elements, e.g., calcium, strontium, or magnesium or oxide thereof such as CoMgO and SrFeO, or such compounds formed with rare earth elements such as La₂CuO₃, La₂CuO₃, PrFeO₃. Still other ternary and higher order compounds or oxides thereof of rare earth elements with other elements, e.g., YₘBaₙCuₖOₓ may also be employed herein. Mixtures of any of these materials would also be useful. The sensing materials useful in this invention are not limited to those listed above but may be any metal material or oxide thereof which undergoes a phase change in response to changing partial oxygen pressures and has associated therewith a change in a measurable physical property.

As an example, the sensing material may be cobalt, which can convert to cobalt oxide (CoO or Co₃O₄) depending on the temperature and partial pressure of the oxygen. That is, as seen in Fig. 2, the particular phase of the Co-O material depends on the temperature and partial oxygen pressure to which the material is exposed. Fig. 2 shows a part of the Pₒ₂-T phase diagram for this system, the solid and the dotted lines separate the Co, CoO, and Co₃O₄ phases. For (T, Pₒ₂) pairs corresponding to the left of the solid line, the sensing material exists only as metallic cobalt. Between the solid and the dotted lines, the material exists as CoO; whereas, to the right of the dotted line, the material exists only as Co₃O₄. On the solid and dotted lines the material is a mixture of the two adjacent phases.

In the present invention, the sensing material may be present in bulk form or as a layer on a substrate, wherein for example the substrate is planar. The layer may be one having a longer length than width. The substrate may be selected from any suitable material, electrically insulating or non-insulating, which will be dependent on the particular use of the sensor as will be described in further detail below.

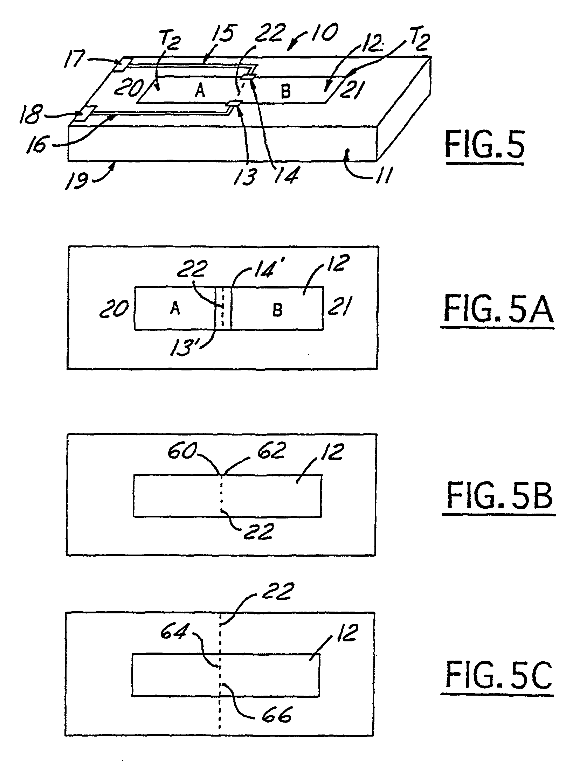

Figure 5 shows an embodiment of the present invention oxygen sensor 10 which is based on resistance measurement. A layer 12 of the metal (e.g. Co) or the metal oxide (CoO) is deposited on an electrically insulating substrate 11. The layer 12 in this embodiment is longer than it is wide. As electrical. resistance of the layer is the property being monitored, the substrate must be electrically insulating. Substrate 11 can be one of many materials known in the art such as alumina, silica, sapphire, and silicon nitride. Still others will be apparent in view of the present disclosure. Layer 12 can be deposited by one of many methods known in the art such as sputtering, electron-beam evaporation, laser ablation, chemical vapour deposition, sol-gel techniques, and thick film printing. Generally, this layer would preferably be a few microns thick. Thin layers minimise sensor response time limitations arising from the need of Pₒ₂-related lattice defects in the material (e.g., Co ions in CoO, or O vacancies in TiO₂) to diffuse throughout the entire layer. On the other hand, thick layers tend to increase the longevity of the sensors. The sensing material of the present invention preferably has a density which is at least 60% of theoretical. If the layer is relatively thin (a few microns or less), 100% density is acceptable. If the layer is thick (e.g., several tens of microns or more) substantial porosity and small grain size (e.g., a few microns) are generally needed in order to decrease the distance over which the ions need to diffuse and thus to decrease the sensor response. Preferably, the sensing material has an average particle diameter less than 10 microns.

It is found that it is critical to the present invention that the sensor also includes a heating means, connectable to a power source, so that a temperature gradient is maintained across the sensing material during its operation. As disclosed above, during the active sensing operation, according to the present invention, the sensing material exists in at least two of the materials phases defining a boundary line therebetween generally perpendicular to the longitudinal axis of the temperature gradient. This temperature gradient is necessary in order to maintain the presence of the at least two different phases, which may be, e.g., cobalt metal and cobalt oxide, or two forms of cobalt oxide in the material. The material may exist in more than two separate phases during operation, for example for a Co-O material, the concurrent phases may be Co/CoO/Co₃O₄, with boundary lines between adjacent two phases. It is to be understood in this invention, that these phases exist at different places in the material with contact between the phases being only at the boundary line between phases. That is, these phases are not intermingled at locations in the material as will be further explained and understood from the figures. For example, in Fig. 5, the phases are designated A and B with boundary line 22 therebetween. These phases are kept separate from one another by means of the use of the heating means which critically maintains a temperature gradient across the sensing material. When the partial pressure of oxygen changes in the ambient atmosphere to which the material is exposed, phase formation takes place. One phase increases in size and the other correspondingly decreases in size. Hence, the boundary line traverses along the longitudinal axis of the temperature gradient in response to the change in the oxygen partial pressure. For example, according to one aspect, if there are two phases present, CoO and Co₃O₄, as the sensor is exposed to changes in oxygen partial pressure, one of the phase increases in size and the other correspondingly decreases so that the boundary line between the phases moves to a different location on the sensing material.

When materials such as cobalt change from one phase to another phase, there is an associated hysteresis effect. This hysteresis effect is usually associated with the nucleation process required for phase transformation, i.e., the initial formation of critical size nuclei of the new phase. Thus in a system wherein the material is in one phase and then changes to another phase, hysteresis would result in a delay of formation of the new phase until critical size nuclei of the new phase form. The length of delay would be tied to the particular material. However, by maintaining a temperature gradient across the material the material is maintained in at least two forms in the material and slow response time associated with hysteresis can be avoided. In operation, it may be desirable to expose the sensor comprised of a metal like cobalt to oxygen to initiate formation of an oxide phase or phases prior to actual operation of the sensor, i.e., to pre-condition the sensor, e.g., prior to insertion in an automotive exhaust gas system as described in more detail below. This may be done, e.g., by exposing the deposited material to a temperature distribution in the range 700-1000°C in air.

The sensor also includes a means for furnishing an output signal in response to the traversal of the boundary line across a fixed detecting location of the sensing material. Since the phase change has associated therewith a change in a measurable physical property, the furnishing means detects the change in the physical property of the material at the fixed detecting location and hence the traversal of the boundary line past this fixed detecting location. Optimally this detecting location on the sensing material is of limited small size and optimally generally centrally located along the longitudinal axis of the temperature gradient and in some detecting embodiments, perpendicular thereto. While it is preferred that the detecting location is centrally located, it is only necessary that the detecting location not be at the ends near the extremes of the temperature gradient.

Measurement of the phase change based on changes in electrical resistivity of the material resulting from changing oxygen partial pressure in the ambient atmosphere, may be accomplished as shown in Fig. 5. In the embodiment shown in Fig. 5, two electrical contacts 13 and 14 for resistance measurement are deposited on the two opposing narrow surfaces of material layer 12 along a line perpendicular to the length of the layer (which corresponds also to the longitudinal axis of the temperature gradient in this embodiment) and generally in the middle of the layer. These contacts 13 and 14 could alternately be deposited, e.g., as relatively closely spaced parallel strips 26 and 28 on one of the planar faces as shown in Fig. 5A, or one side as shown in Fig. 5B as 60 and 62, on the same planar face as shown in Fig. 5C as 64 and 66, or even as parallel strips (not shown), that is, one on one planar face and the other on an opposing planar face. The contacts could also be located within the sensing layer such that the region between the contacts would encompass the traversal of the boundary line during active sensing operation.

As would be appreciated by those skilled in the art in view of the present disclosure, the fixed detecting location defined by contacts 13 and 14 could be located at different places along the longitudinal axis of material 12 closer to either end of the material layer. Nearer the centre ("generally centrally located") is however preferred because it is easier then to optimise sensor sensitivity and wide Pₒ₂ range of operation as will be discussed later in this invention. Thus, by "generally centrally located" is meant that the detecting location is not at the ends of the sensing material at the extreme temperatures but located somewhere along the temperature gradient axis through which the boundary is expected to traverse during sensor operation. These contacts 13 and 14 in the configuration of Fig. 5 would optimally be generally along a line perpendicular to the temperature gradient axis, but this need not be exact. Electrical leads 15 and 16 are also deposited on the substrate 11 to connect contacts 13 and 14 to the electrical pads 17 and 18 where a voltage or a current is connected from an external source for the resistance measurement. Electrical contacts, leads and pads are made from a high temperature conductor such as platinum. These electrical means are able to furnish an output signal in response to the traversal of the boundary line corresponding to a phase change of the sensing material effected by the changing oxygen partial pressure of the sensing material in a region between the electrical means.

Further in this Fig. 5 embodiment, an electrical heater 19, made for example of platinum, is deposited on the back side of substrate 11 to raise the temperature of sensor 10 to the desired values. Heater 19 is constructed in such a way that it delivers different electrical power to different parts of the substrate so that a temperature gradient is established along the length of sensing material layer 12. The criticality of maintaining a temperature gradient across the sensing material has been discussed in detail previously. Consequently, the temperature T₂ at one end 20 of the sensing material layer is higher than the temperature T₁ at the other end 21 of layer 12. The temperature of the two contacts 13 and 14 can be measured and controlled with any temperature sensing element, many being well known in the art. For example, a thermistor can be deposited on the substrate 11 near contacts 13 and 14. If needed, more temperature sensing elements can be deposited on substrate 11 to better monitor and control the temperature gradient across sensor layer 12.

During the operation of invention oxygen sensor 10 for measuring a specific partial oxygen pressure P_{o2,c}, the power to heater 19 is adjusted so that the temperature Tₘ at the two electrical contacts 13 and 14 is equal to T_{c}, the temperature which corresponds to the transition from one oxide phase to the other at the oxygen partial pressure P_{o2,c}. For a range of Pₒ₂ around P_{o2,c}, sensing material layer 12 contains at least two distinct phase sections, such as metal oxide phases A and B, e.g. CoO and Co₃O₄, respectively, one to the left of and another to the right of the boundary line 22, which is seen as the division or separation of the two phases. This boundary line 22 is generally perpendicular to the temperature gradient (in this embodiment, perpendicular to the longitudinal axis of material layer 12). As can be seen from Fig. 5, these phases A and B exist concurrently, i.e., at the same time, in the material but at distinct places in the sensing material.

In the case of T2 being higher than T1, and if the oxygen partial pressure increases, the boundary line 22 will move to the left as more of phase B (Co₃O₄) forms. If the resistance between contacts 13 and 14 is monitored, the resistance shows a large jump as the boundary line 22 passes by the two contacts which happens whenever the ambient Pₒ₂ is varied through the value P_{o2,c}. This jump is shown in Fig. 6 for the CoO/Co₃O₄ system. In this example, the T-gradient along the layer is constant with T₁ = 860°C and T₂ = 900°C. Hysteresis is avoided in this case because the two phases always are present and the nucleation of the new phase is not needed. It is apparent that, a different value of P_{o2,c} can be detected by choosing another appropriate temperature at the position of the contacts 13 and 14.

The resistance of the sensing element between contacts 13 and 14 can be measured by methods well known in the art. For example, a current can be sent through contacts 13 and 14 and the measured voltage drop between these contacts can be used to calculate the resistance of the sensing material between these contacts; or a voltage can be applied to the sensing material element through a voltage divider circuit; or the resistance between 13 and 14 can be one leg of a conventional resistance bridge. Still other configuration may be used as would be apparent to those skilled in the art in view of the present disclosure. For example, two additional contacts can be deposited one on each end of the sensing material and used to apply a voltage or the current. Contacts 13 and 14 are then used only to measure the voltage drop across them. The contacts 13 and 14 in this later embodiment would have to be offset relative to one another, i.e., not along the same perpendicular to the temperature gradient.

The type and magnitude of the temperature gradient in the sensor 10 depends on the application. In general, the smaller is the T-gradient, the higher is the accuracy of the sensor. If the T-gradient is constant along the sensing material layer 12, a smaller T-gradient means that the difference between T₁ and T₂ is smaller. In that case, the range of allowable variation of Pₒ₂ that preserves both phases in the layer is smaller. A typical Pₒ₂ range is one that covers an order of magnitude, that is the ratio of the maximum and minimum Pₒ₂ is 10. The temperatures T₁ and T₂ at the two ends of layer 12 corresponding to these maximum and minimum Pₒ₂ can be determined from the T-Pₒ₂ phase diagram (e.g., Fig. 2 for Co-O system). If, during sensor operation, the ambient Pₒ₂ unexpectedly changes to a value outside the allowable Pₒ₂ range, the material may become a single phase, i.e., so that one of the other two phases in sensing layer 12 disappears and the sensor is not able to actively sense. In this case, when the ambient Pₒ₂ returns to a normal value within the allowable Pₒ₂ range, the sensor needs some extra time for the second phase to again form. Nevertheless, after this delay, the sensor will become fully operational and return to active sensing. A high accuracy around the desired value P_{o2,c} combined with a wide range of allowable Pₒ₂ may be achieved by generating a special non-constant T-gradient along sensing material layer 12. For example, the heater and the structure can be designed so that the T-gradient is small near the centre of layer 12 and very large at the two ends of layer 12. From this discussion, it is apparent that the centre of layer 12 is a convenient location for the contact pads 13 and 14.

The '182 patent sensor, as well as the present invention disclosed herein, can not be conveniently used to measure any value of a varying ambient oxygen pressure. Instead these sensors can monitor whether the ambient oxygen pressure is higher or lower than a selected specific value P_{o2,c} (Fig. 6). In this respect, the sensor of this invention behaves similarly to the lambda sensor of the prior art (Fig. 1) used for stoichiometric A/F control, except that the "switch point" of the present sensor can be adjusted to be at any A/F value. That is, a new value of P_{o2,c} or of (A/F)_{c} can be selected by changing the temperature of layer 12 at the location of contacts 13 and 14 to the appropriate value.

Consequently, when the present sensor is used as an oxygen or A/F feedback control sensor, the feedback control is of the "limit-cycle" type rather than proportional control, similar to the stoichiometric A/F control systems based on the lambda sensor. In this limit-cycle control, the A/F ratio is ramped from a value lower than (A/F)_{c}, to a value higher than (A/F)_{c} or vice versa, with the direction of the ramping depending on the sensor output. When A/F passes through (A/F)_{c}, the sensor signal changes from a low to a high value or from a high to a low value as the boundary line 22 traverses (Fig. 5), correspondingly from the left to the right or right to left, and the electronic feedback system is ordered to change direction of the A/F sweep. Consequently, the A/F oscillates between two A/F values, one lower and the other higher than (A/F)_{c}, at a certain frequency called "limit-cycle frequency".

The device of the present invention can be made in planar configurations other than the one shown in Fig. 5. For example, a planar structure can be fabricated similarly to the so-called planar ZrO₂ sensors, both the stoichiometric Nernst-type and O₂-pumping-based UEGO and LEGO sensors. In these sensors, a series of ceramic tapes made from ZrO₂ (and possibly also from other materials) having appropriate geometry (shape and thickness) together with planar heater and electrodes are pressed together and sintered at high temperatures to form the planar sensor element.

Although planar geometry is a most convenient geometry for establishing a temperature gradient, more 3-dimensional embodiments can also be used. Also temperature distributions other than along a length of the sensing material, as shown e.g., along the length of the sensing material layer of the embodiment of Fig.5, may be used. Such other distributions are acceptable as long as they are such that both phases of the sensing material exist, during active sensing operation, in the sensing material separated by a phase boundary line which moves through the detecting location, in the Fig. 5 embodiment being defined by spaced contacts 13 and 14 which detect the transversal of the phase boundary line. These embodiments as well as others included within the present invention will be apparent to those skilled in the art in view of the present disclosure.

Limitations due to ion diffusion in the material (e g. Co ions in the case of CoO) can be overcome by operating at sufficiently high temperatures where the diffusion process is fast; and by using ceramics with high porosity and very small grain size or by using thin films. Limitations in the speed of this phase change due to slow surface processes affecting the transfer of oxygen between the material and the ambient gas can be minimised by, again, operating at high temperatures or by adding on the surface of the materials catalytic particles (e.g., Pt) which help the oxygen transfer.

Advantageously, according to the present invention, the limitations due to the nucleation process can be minimised by operating the sensor so that both phases are always present in the sensing material. This is accomplished by establishing a temperature distribution along the material instead of maintaining the material at a, constant temperature as in some prior art sensors.

## Claims

1. An oxygen sensor (10) for detecting a change of oxygen partial pressure in an ambient atmosphere said sensor comprising:
a sensing material (12) selected from a metal or its oxides and which, when at an elevated temperature and exposed to a gas containing changing partial pressures of oxygen, is capable of changing from one metal or metal oxide phase to another such oxide phase and vice versa and associated therewith a change in a measurable physical property thereof;
heating means (19) connectable to a power source to provide heat to the sensing material (12) and adapted to maintain a temperature gradient (T₁-T₂) across said sensing material (12) whereby said material exists, during active sensing operation, in at least two of said phases defining a boundary line (22) therebetween generally perpendicular to the longitudinal axis of said temperature gradient (T₁-T₂), said boundary line (22) traversing longitudinally along said axis in response to changes in the oxygen partial pressure of the ambient atmosphere;
means for furnishing an output signal in response to a change in the physical property of said sensing material (12);
**characterised in that**:
the heating means (19) is an electrical heating means;
the means for furnishing an output signal is adapted for detecting a change in resistance or conductivity of said sensing material in response to traversal of said boundary line across a fixed detecting location of the sensing material; and comprises spaced apart electrical means (13,14) located within or on the same or opposing surfaces of said sensing material (12) for measuring the electrical conductivity of said sensing material (12) therebetween.

2. A sensor according to claim 1, wherein said heating means (19) comprises an electrically conductive material (a) electrically insulated from said sensing material (12), (b) located in proximate location to said sensing material (12), (c) and being connected to said power source for maintaining said temperature gradient (T₁-T₂).

3. A sensor according to either claim 1 or claim 2, wherein said sensing material is a layer (12) deposited on a substrate (11).

4. A sensor according to any one of the preceding claims, wherein said sensing material is selected from a metal, a compound of two or more metals, or oxides thereof, wherein said metal is selected from the group consisting of copper, palladium, indium, ruthenium, and rhodium; 3d transition metals; rare earth elements.

5. A sensor according to claim 3, wherein said substrate (11) is planar.

## Patentansprüche

1. Ein Sauerstoffsensor (10) zur Detektion einer Änderung im Sauerstoff-Partialdruck in einer umgebenden Atmosphäre, wobei dieser Sensor umfaßt:
ein Abtastmaterial (12), ausgewählt aus einem Metall oder seinen Oxiden; und
welches, wenn es sich bei einer erhöhten Temperatur befindet und einem sich ändernde Partialdrücke von Sauerstoff enthaltenden umgebenden Gas ausgesetzt ist, in der Lage ist von einer Metall- oder Metalloxidphase in eine andere derartige Oxidphase zu wechseln und umgekehrt; und womit eine Änderung in einer meßbaren physikalischen Eigenschaft hiervon zusammenhängt;
eine an eine Stromquelle anschließbare Heizvorrichtung (19), um Wärme zu diesem Abtastmaterial (12) bereitzustellen; und dafür angepaßt, um einen Temperaturgradienten (T₁-T₂) über dieses Abtastmaterial (12) hinweg beizubehalten, wodurch dieses Material während des aktiven Abtastbetriebes in mindestens zwei dieser Phasen existiert, und dazwischen eine zu der Längsachse dieses Temperaturgradienten (T₁-T₂) allgemein senkrechte Grenzlinie (22) definiert, wobei diese Grenzlinie (22) sich in Reaktion auf Änderungen im Sauerstoff-Partialdruck der umgebenden Atmösphäre an dieser Achse entlang verschiebt;
eine Vorrichtung zur Erlassung eines Ausgabesignals als Antwort zu einer Änderung der physikalischen Eigenschaft dieses Abtastmaterials (12) ;
**dadurch gekennzeichnet, daß**
die Heizvorrichtung (19) eine elektrische Heizvorrichtung ist;
wobei die Vorrichtung zur Erlassung eines Ausgabesignals angepaßt ist zur Detektion einer Änderung im Widerstand oder in der Leitfähigkeit dieses Abtastmaterials in Reaktion auf den Durchgang dieser Grenzlinie über einen festgelegten Detektionsort auf dem Abtastmaterial hinweg ; und zueinander mit Abstand angeordnete, elektrische Vorrichtungen (13, 14) umfaßt, die innerhalb oder auf den gleichen oder sich gegenüberliegenden Oberflächen dieses Abtastmaterials (12) angeordnet sind, um die elektrische Leitfähigkeit dieses Abtastmaterials (12) dazwischen zu messen.

2. Ein Sensor gemäß Anspruch 1, in dem diese Heizvorrichtung (19) ein elektrisch leitfähiges Material (a) von diesem Abtastmaterial (12) elektrisch isoliert, (b) in einer Lage nahe diesem Abtastmaterial (12) angeordnet und (c) an diese Stromquelle angeschlossen umfaßt, um diesen Temperaturgradienten (T₁-T₂) beizubehalten.

3. Ein Sensor gemäß entweder Anspruch 1 oder Anspruch 2, in dem dieses Abtastmaterial eine auf einem Substrat (11) abgelagerte Schicht (12) ist.

4. Ein Sensor gemäß einem der vorstehenden Ansprüche, in dem dieses Abtastmaterial aus einem Metall, einer Mischung von zwei oder mehr Metallen, oder Oxiden hiervon gewählt ist; worin dieses Metall aus der Gruppe gewählt ist die besteht aus: Kupfer, Palladium, Indium, Ruthenium und Rhodium; 3d-Übergangsmetalle; und Seltenerden-Elemente.

5. Ein Sensor gemäß Anspruch 3, in dem dieses Substrat (11) planar ist.

## Revendications

1. Capteur d'oxygène (10) destiné à détecter un changement de pression partielle d'oxygène dans une atmosphère ambiante, ledit capteur comprenant :
un matériau de détection (12) sélectionné à partir d'un métal ou de ses oxydes et qui, lorsqu'il se trouve à une température élevée et qu'il est exposé à un gaz contenant des pressions partielles d'oxygène changeantes, est capable de se transformer d'une phase de métal ou d'oxyde de métal en une autre telle phase d'oxyde et vice versa et, associé à celui-ci, un changement d'une propriété physique mesurable de celui-ci,
un moyen de chauffage (19) pouvant être relié à une source d'énergie afin de fournir de la chaleur au matériau de détection (12) et conçu pour maintenir un gradient de température (T₁-T₂) au travers dudit matériau de détection (12) d'où il résulte que ledit matériau existe, pendant une opération de détection active, en au moins deux desdites phases définissant une ligne de limite (22) entre celles-ci sensiblement perpendiculaire à l'axe longitudinal dudit gradient de température (T₁-T₂), ladite ligne de limite (22) se déplaçant longitudinalement le long dudit axe en réponse à des changements de la pression partielle d'oxygène de l'atmosphère ambiante,
un moyen destiné à fournir un signal de sortie en réponse à un changement de la propriété physique dudit matériau de détection (12),
**caractérisé en ce que** :
le moyen de chauffage (19) est un moyen de chauffage électrique,
le moyen destiné à fournir un signal de sortie est conçu en vue de détecter un changement de résistance ou de conductivité dudit matériau de détection en réponse à la traversée de ladite ligne de limite au travers d'un emplacement de détection fixe du matériau de détection, et comprend des moyens électriques espacés (13, 14) situés à l'intérieur ou sur la même surface ou sur les surfaces opposées dudit matériau de détection (12) en vue de mesurer la conductivité électrique dudit matériau de détection (12) entre ceux-ci.

2. Capteur selon la revendication 1, dans lequel ledit moyen de chauffage (19) comprend un matériau électriquement conducteur (a) électriquement isolé dudit matériau de détection (12), (b) situé à un emplacement proche par rapport audit matériau de détection (12), (c) et étant relié à ladite source d'énergie en vue de maintenir ledit gradient de température (T₁-T₂).

3. Capteur selon l'une ou l'autre de la revendication 1 ou de la revendication 2, dans lequel ledit matériau de détection est une couche (12) déposée sur un substrat (11).

4. Capteur selon l'une quelconque des revendications précédentes, dans lequel ledit matériau de détection est sélectionné à partir d'un métal, d'un composé de deux ou plusieurs métaux, ou d'oxydes de ceux-ci, dans lequel ledit métal est sélectionné parmi le groupe constitué du cuivre, du palladium, de l'indium, du ruthénium et du rhodium, de métaux de transition 3d, d'éléments de terres rares.

5. Capteur selon la revendication 3, dans lequel ledit substrat (11) est plan.
